# EUROPEAN PATENT APPLICATION

(11) **EP 2 792 729 A1**
(43) Date of publication of application: **22.10.2014**
(21) Application number: 13164046.8
(22) Date of filing: 17.04.2013
(51) Int. Cl.: C10G 3/00

(54) **Process for hydroprocessing a liquid feed comprising hydrocarbons into fuel components**

(71) Applicant: XTLgroup bv, 2900 AD Capelle a/d Ijssel (NL)
(72) Inventor: KLEIJNTJENS, Rene, 4706 CC ROOSENDAAL (NL); VERHULP, Donny, 3333 SX ZWIJNDRECHT (NL); HETTINGA, Cornelis, 5235 BG 'S-HERTOGENBOSCH (NL); PANNEKOEK, Leendert, 3074 ER ROTTERDAM (NL)
(74) Representative: Oberlein, Gerriet H. R.

(57) **Abstract**

A flexible process capable of hydoprocessing a wide variety of liquid hydrocarbon feeds has been developed wherein the process can be operated in such a manner that the various units are operated as if they were one single operation. The process comprises the steps of injecting the liquid feed into a hot vapor flow from an evaporator for quenching the hot vapor flow forming a two phase vapor-liquid flow, separating the two phase vapor-liquid flow in a liquid flow and a vapor flow in a separating device, introducing the liquid flow from the separating device into the evaporator by a spraying device forming droplets of liquid comprising hydrocarbons, introducing non-condensable hydrocarbon gasses and hydrogen gas into the evaporator for evaporating hydrocarbons from the droplets of liquid by an upward moving vapor flow of non-condensable (hydrocarbon) gasses and hydrogen gas and for cracking the evaporated hydrocarbons forming cracked hydrocarbons.

## Description

To meet the ever growing demand of transportation fuels such as gasoil and gasoline in a more sustainable manner than by using mineral oil alone, new green and clean technologies are required. A field where these technologies are needed is the conversion of (liquid) hydrocarbon waste streams. Converting waste into gasoil and gasoline by definition is recycling and therefore is more sustainable than refining mineral crude oils. This aspect has been recognized by the EU when its climate targets were set (10 % renewable transportation fuels in 2020). In the EU Renewable Energy Directive (RED-2009-Annex V), the carbon footprint for renewable fuels made from waste are denoted to have a greenhouse emission savings above 80 % compared to the mineral default value.

One straight forward way of reducing the carbon footprint of fuels is recycling liquid hydrocarbon waste. Depending on the type of hydrocarbons, and the way of collecting the waste, these feedstock are found in various volumes and compositions. Waste oils from ship waste handling have a variable composition depending on the collected tank residues, fuels, solvents, lubricating oils or other. The same holds for industrial and machinery oil waste streams. Multi-components mixtures of hydrocarbons also will be found in pyrolysis oil from municipal plastic waste or plastic scrap, here much more impurities such as metals, foils or PVC might be expected. Also pyrolysis oils from used tires is forecasted a growing volume. Another pyrolysis oil derived from biomass may be more uniform in composition. Compared to plastic pyrolysis oils biomass oils have a significant level of oxygen. More defined waste streams may be found in industry, here factories can produce a fixed amount of waste from production start-up, off spec products or leftovers. In addition, some side products from processes as cracking also have to be reused.

For the near future it is expected that packaging producers will be more and more involved - and obliged - to recycle their produce and therefore pay more attention to the full product life cycle, including the waste stage ("cradle to cradle principle"). Pyrolysis oils from plastics waste such as PET, poly-styrene, poly-olefins such as poly-ethylene (LDPE or HDPE) or poly-propylene will be increasingly found in the market.

Unlike mineral oil processing, the supply chain of waste processing is dominated by the first step: collecting of the solid waste that has to be liquefied. Whether plastic packaging waste, tires or waste such as plastic foils are being considered, the collection an sorting method almost always is volume and time consuming. As a consequence, the pyrolysis plants are limited by their feedstock collecting capacity. Pyrolysis waste oils therefore are being produced currently at scales in between 5000-10,000 ton per year. In addition, these multi-components mixtures of hydrocarbons are unlikely to be used in full scale refineries due to the risk of contamination of the daily operations.

The combination of waste feed stocks and high quality demands for the output (e.g. gasoline according to the EN 228 standard, EN 590 gasoil or kerosene ASTM D 1655) requires technology that produce "drop in fuels". These are fuels or components that fully fit within the existence mineral fuel standard specifications.

Evaporation unit operations such as forced circulation evaporators, short tube vertical or long tube horizontal evaporators, falling film, nozzle spray evaporator are widely used in industry and described in standard textbooks such as "Unit Operations of chemical engineering" (Mcgabe et al, MCGraw-Hill 1956), or the "Perry Chemical Engineering Handbook" (McGraw-Hill, first edition 1934). Another way of creating a vapor is by using cokers, The Fluid Coking technology effectively removes the lower limit of volatile content in the petroleum coke, associated with delayed coking. In fluid coking cracking reactions occur at higher temperatures (about 480-565 °C or 900-1050 °F) and shorter contact times than in delayed coking. Improvements have been made in order to achieve better cokes or more liquids such as US patent 1873024 (oil and vapor phase coking and cracking) or US patent 2881130 (fluidized bed coking of heavy hydrocarbons.

Catalytic hydroprocessing technologies have been developed by companies such as UOP, IFP, Haldor Topsoe Lurgi, or Bergius Pier for various applications and often on a very large scale. Basically a division can be made in hydrocracking and hydrotreating or hydrofining. The latter process is used to catalytically stabilize hydrocarbons and or remove elements from the feedstock such as sulphur, nitrogen, oxygen, halides or trace metals. After reaction with hydrogen, products like H2S, ammonia, saturated hydrocarbons and free metals are formed for the impurities and saturated components are formed from unsaturated components such as olefins or aromatics. Liquid residence times for hydro treating (LHSV) typically is in between 1,5 and 8 (Petroleum refining, Gary and Handwerk, 1984), pressures are in between 100-3000 PSI (6,9-207 bar) and temperatures in between 600-800 degrees Fahrenheit (316-427 °C).

Hydrocracking is a more severe process often using more catalyst and higher pressure; basically it consists of a thermal cracking step (breaking of the molecule) with hydrogenation superimposed. Both steps are seen as complementary since the cracking provides the olefins for hydrogenation and the hydrogenation provides the heat for cracking. Typical process conditions are pressures of 1000-2000 PSI (68,9-138 bar), and temperatures in between 500-800 °F (260-427 °C).

The outcome of each specific hydrotreating or hydrocracking process depends on the type of feed stock, the catalyst type, reaction conditions such as temperature and pressure and the residence time of the feed stock. Related to the current disclosure, the following relevant descriptions of prior art have been found:

In US patent 2,888,393 by the Texas Company (Texaco) dated 1959, a process is disclosed in which the liquid coker oil feed is heated with hot cokes particles coming from a side coke burner. To suspend these cokes particles in a fluidized bed hydrogen gas is introduced at the reactor bottom. In this manner a three phase solid-liquid-gas (coke particles-feed oil-hydrogen) slurry is created. Vapors evaporating from this coker slurry are directly fed to an up flow fixed catalytic bed gas reactor where further hydro-processing takes place. Cracking temperatures in the fluid coker are in ranging from 900-1100 Fahrenheit (482-593 degrees Celsius), pressures are applied in between 200-2000 PSI (13.8- 138 bar). After this single treatment reactor, the vapor products are condensed and the remaining gasses recycled.

In British patent 728,755 by BP a process is disclosed for the catalytic desulphurisation of benzole or motor fuel in which the fuel in vapor form in admixture with hydrogen is passed over a sulphur resistant dehydrogenation-hydrogenation catalyst. This process is carried out at 100 Psi (7 bar), 750-800 degrees Fahrenheit (400-427 degrees Celsius), a space velocity of 0,3-3,0 v/v/hr over a cobalt/ molybdenum oxide catalyst.

In patent WO9607716A1 from Shell International Research a gas liquid process is disclosed in which the hydrocarbon oil is fed into a furnace, the hot oil is fed into a soaker together with hot synthesis gas also containing hydrogen. In the soaker a gas liquid cracking system is maintained resulting a vapor phase with cracked evaporated product and a bottom flow with the residue. Cracking conditions in the soaker are ranging from 420-650 degrees Celsius. A thermal cracking efficiency of above 35% is claimed. No catalysts have been applied in this process.

In British patent 1,434,018 by the British Gas Cooperation a continuous process is disclosed for the vapor phase hydrogenation of a hydrocarbon oil into methane. This process comprises the introduction of a vaporized hydrocarbon oil and a hydrogen containing gas into a thermally insulated reaction chamber. Temperatures are in between 600 and 800 degree Celsius and the pressure at least 5 atmosphere (bar). From the first chamber the gaseous reaction products are passed to a second chamber where further hydrogenation takes place at temperatures in between 650 and 800 degrees Celsius. In the second reactor may be a fluidized bed. No catalyst is used in this process.

In US 4,983,279 patent by VEBA Oel Aktiengesellschaft a process is disclosed for the processing and hydrogenation of heavy oils and residues. In this process both the hydrogen gas and the liquid feed are being preheated in several heat exchange units before entering the central liquid phase hydrogenation reactor. This reactor is operated in between 400 and 500 degrees Celsius and a pressure in between 150 and 1200 bar. The top product of this liquid hydrogenation reactor may after separation being passed over a gas phase hydrogenation reactor containing catalytic solids. Products in the gas phase are finally being condensed in separators, while the hydrogen is being recompressed and recycled.

The low pressure hydrogenation of olefins is described in patent US 6,037,5109 (BASF Aktiengesellschaft). In this gas phase hydrogenation process under mild conditions with a preferred olefines feed from C6 to C20. Core is a reactor in which the feed liquid is introduced into a gas stream containing at least hydrogen over a catalyst bed. Olefins (at least 50 % present in the feed) are treated from 60-130 degrees Celsius at pressures from 2 to 20 bar. In this patent no further process information is described.

In US patent 4,115,462 by Bayer Aktiengesellschaft, aromatic compounds are hydrogenated in the gas-phase at atmospheric pressure by means of reactor type in which bundles of long tubes (1- 6m) and small diameters (25-75 mm) are surrounded by a cooling jacket. As catalyst palladium on a lithium alumina spinel is used in between 200 and 350 degrees Celsius.

In US patent 6,187,980 by Catalytic Distillation Technologies the gas phase hydrogenation of benzene at low pressure 0.1-200 PSI (0.006-13.8 Bar) and 350-500 degrees Fahrenheit (177-260 °C) is disclosed. Here the reaction liquid is boiling within a distillation column. The condensing reflux with the liquid benzene is running down a catalyst bed where it is contacted with the rising hydrogen. In this way this invention can be framed as a trickle bed hydrogenation system within a distillation column.

An example of hydro-processing in the liquid/gas phase is given in US patent 3,775,291 by the Lummus Company, here jet fuel is produced in one single reactor containing several solid catalyst beds at pressures ranging from 28 bar up to 107 bar at temperatures in between 94 and 232 degrees Celsius. Core of this invention is a downward trickle system were in two reaction zones were liquid feed, recycle and hydrogen are being combined to flow through the catalyst beds.

In US patent 4,451,354 by Exxon Research, a slurry type process is described where the feed oil is contacted with the catalyst and hydrogen to create liquid phase. The process first hydrofining takes place at pressure between 1000-2000 PSI (69-138 Bar) and temperature between 680 and 775 degrees Fahrenheit (360-412 degrees Celsius). Secondly a liquid hydrocracking process is carried out at pressures between 500-2000 PSI (34,5 - 138 Bar) and temperature between 775 and 850 degrees Fahrenheit (412-454 degrees Celsius). After the cracking reactor a separation unit such as a fractional distillation is placed. Part of the distillation products again is mixed with hydrogen to create a liquid recirculation loop being brought back to the first reactor.

Another example of slurry phase hydrotreating is given in US 4,137,149 from Exxon Research and Engineering. From the first atmospheric distillation unit the heavy bottom fraction having a boiling point above 1050 degrees Fahrenheit (565 degrees Celsius) is mixed with catalytic solids and subsequently treated in a second reactor. In this slurry reactor hydrogen is introduced to hydrofine the slurry under partial hydrogen pressures of 500-1500 PSI (34,5 -103 Bar) and temperatures in between 650 and 750 degrees Fahrenheit (343-400 degrees Celsius). Having removed the solids from the hydrofining unit, the product is being recycled to the first distillation unit.

In US 7,938,952 B2 from Institute Francaise du Petrol a hydroconversion process for converting residues in a multi-stage process is disclosed. The bottom streams of an atmospheric and vacuum distillation unit are hydrogenated in a series of two reactors denoted as "residue and distillate ebullated bed reactors". In this reactor type the liquid hydrocarbons and hydrogen gas are forced upward through a catalyst bed at such a rate that the particles move randomly. Produced vapors are separated at the top of this reactor. No process conditions have been disclosed.

In US 2011 083997A1 from Velocys Inc a process is described in which various methods are used to intensify the contact process between heavy oil and hydrogen using a micro-channel reactor. Core of the invention is a liquid phase micro-channel reactor enabling fast mass and heat transfer. The technology may be framed as a manner of process intensification.

In another process, described in US patent 4,298,457 (University of Utah), hydropyrolysis is described to treat liquid feedstock such as mineral oil crudes, tar sand and residues in the liquid phase in between 450 and 650 degrees Celsius under hydrogen pressures ranging from 120-2250 PSI (8,3- 155 bar). Experiments are reported at 525 degrees Celsius, a hydrogen pressure of 1500 PSI (103,4 bar) and a liquid residence time (LHSV) of 3 hr-1. The used process is described at a "flow process", without further specification.

In US patent 2010256428 A1 from the Gas Technology Institute a multistage biomass pyrolysis process is disclosed using molecular hydrogen to produce an output of partially deoxygenated and hydro-pyrolysis liquid product, pyrolysis vapors (C1-C3), H2O, CO, CO2 and H2. As hydro-conversion reactor a fluidized bed is used. As feed a biomass slurry is used containing loose biomass particles having a maximum size of about 3 mm. The pressure range is from 100 to 800 PSI (6,9- 55,2 bar) and the temperature range from 800-1000 °F (426-537 degrees Celsius) using a weight hourly space velocity in between 0.2-10 (hr-1).

Despite these disclosures, there remains a need for process improvement since the following problems have not been solved in current technology:
a) Separation of liquid droplets from a quenched vapor top product flow is carried out in a separated unit operation
b) Hydrogen gas injection in a liquid reaction zone, or in a solid-liquid slurry leads to low reaction rates (diffusion limitations), high hydrogen pressures and unwanted side reactions such as cokes formation
c) Existing evaporation technology does not enable heavy hydrocarbon fraction to evaporate easily under pressures above atmospheric
d) Evaporation and vapor phase cracking conditions are not properly combined in one single reactor
e) The required flexibility for multi-feedstock treatment is not achieved in current gas phase hydro-processing

### DETAILED DESCRIPTION

The present invention implies an integrated multi stage evaporation and hydrotreating process making it possible to operate the entire process in such a manner that the various units are operated as if they were one single operation. The present invention therefore may be framed as a manner of process intensification (PI).

The process for hydro processing a liquid feed comprising hydrocarbons comprises the steps of injecting the liquid feed into a hot vapor flow from an evaporator for quenching the hot vapor flow forming a two phase vapor-liquid flow, separating the two phase vapor-liquid flow in a liquid flow and a vapor flow in a separating device, introducing the liquid flow from the separating device into the evaporator by a spraying device forming droplets of liquid comprising hydrocarbons, introducing non-condensable hydrocarbon gasses and hydrogen gas into the evaporator for evaporating hydrocarbons from the droplets of liquid by an upward moving vapor flow of non-condensable hydrocarbon gasses and hydrogen gas and for cracking the evaporated hydrocarbons forming cracked hydrocarbons.

As feed of the process multi component hydrocarbons mixtures are used. As such these mixture can be made out of any hydrocarbon component ranging from saturated paraffines, iso-paraffines, olefines, aromatics, poly-aromatics etc. These hydrocarbons may contain heterogenic atoms such as S, N, or O. In general these hydrocarbons mixtures may have carbon numbers ranging from C6 (e.g. hexane) up to C40 or higher. These mixtures may have more then 1000 different types of molecules. In addition to the hydrocarbon chemical composition also impurities such as organic chlorine components, organic sulphur, oxygenated hydrocarbons or water may be present. For this process, the only feature that is required is the fact the multi-component mixture can be introduced into the system as a liquid. Examples of these multi-component mixtures are waste pyrolysis oil from plastics, tyres or packaging or pyrolysis oils from biomass. In the field of waste oils, products from ship waste oil collecting, tank cleaning, used hydraulic oils are also being used as feedstock. Regarding mineral products oils, crude mineral oil, refinery products such as heavy fuel oil or residues can be considered. Biological oils such as vegetable oil, used cooking oil but also biodiesel (fatty acid methyl ester) may form these waste streams. Also mixtures of these products can be considered as feed.

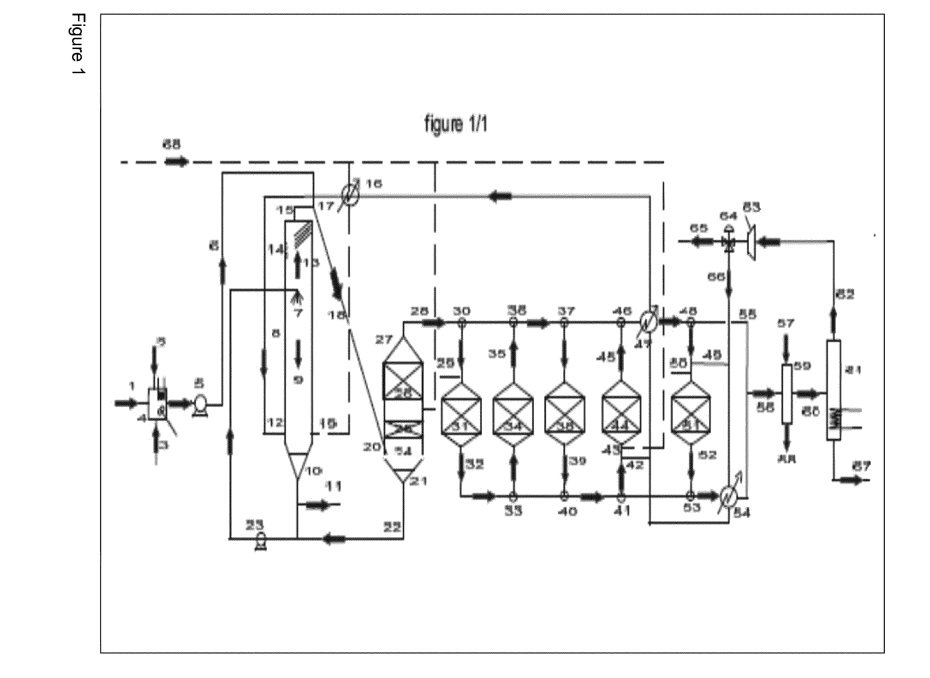

A preferred embodiment for this process installation is shown in figure 1. These feeds **(1)** can be mixed with other or similar feedstock **(2, 3)** in the atmospheric and preferably heated feed blender **(4)** then pumped **(5)** to become the liquid feed **(6)** being used to quench (to cool down) the top vapor flow **(15)** of the evaporator **(8).** The quench injection **(17)** of the liquid feed **(6)** into the hot vapor flow **(15)** takes place at the beginning of the sloping tube **(18)** (or a pipe). This quench typically suits two purposes, first the hot vapor flow is cooled down due to heat of evaporation being used by the lighter hydrocarbon components (although depending on the feedstock in general these components will be below C16) evaporating from the injected liquid feed. Second, the evaporated components no longer have to be evaporated in the main evaporator itself, thereby saving energy in this process unit. Cooling down the hot vapor is needed since the operating temperatures in the gas treatment section is lower then in the evaporating unit. The quenching process typically lead to a two phase vapor/liquid flow where the liquid is being atomized in the form of sprayed droplets. After the quench injection this two phase liquid-vapor flow passes through the sloping conical tube **(18)** in which the mixture is accelerated due to a decreasing tube diameter. This accelerated vapor mixture containing feed vapors, recycle gas, fresh hydrogen and droplets (of the non-evaporating components of the liquid feed) is injected following the angle (typically in between 15 and 30 degree compared to the vertical axis) of the sloping tube into the bottom section of the first gas phase reactor. In the preferred embodiment the angled tube is connected to a downward headed radial injection system **(20)** allowing the injected mixture to follow the curved wall as if it were a gas cyclone. In this way the centrifugal force separates the droplets from the vapor phase, thus collecting the droplets near the wall to become subsequently part of the liquid phase in the sunk **(21).** In this way the reactor bottom **(24)** operates as an integrated separation device operated at the required process conditions, more in specific at pressures below 10 bar such as applied in this process. This phase separation takes place under the grid **(25).** The non-evaporated components are collected in the said liquid sunk and being brought back through flow line **(22)** by means of pump **(23)** to the spray nozzle **(7)** placed near the top of the evaporator section. In the spray nozzle, the liquid droplets are atomized and can thus be split into an upward moving vapor flow being carried by the rising hot vapor flow **(13)** and a downward moving flow of shrinking droplets **(9)** containing the components not yet evaporated. Due the enhanced mass transfer between the falling droplet and the rising vapors first evaporation from the droplet outer shell takes place and second these released vapors will (mildly) crack in an hydrogen rich environment during their way to the top of this reactor. The evaporator is operated in between 400 - 600 degrees Celsius, more specific around 500 degrees Celsius at pressures below 10 bar (145 PSI). The components unable to evaporate under the process conditions applied will finally fall into the liquid sunk reservoir **(10).** From this sunk the heavy components might be withdrawn from the process **(11).** In case this sunk flow is reusable it can be reinjected in the evaporator by means of a connection to pump **(23).**

In another embodiment a high temperature heat exchanger may be used to cool down the vapors leaving the top of the evaporator (15). This heat exchanger can be used in addition to the sloping tube quench system (17) or as a replacement of the mentioned quench injection.

Fresh hydrogen gas introduced at (***19***) and the recycled main vapor flow **(66)** introduced at (***12***) are introduced well above the liquid level to avoid unwanted liquid reactions such as coke formation. Preferably, these gasses are introduced in a radial manner in such a fashion that they swirl in a curve following the lower part of the evaporator wall. As a result they prevent fouling of this part of the evaporator.

From the said bottom part of this evaporator the gasses subsequently flow upward counter currently to the falling droplets **(9).** As a result at the upper end of the evaporator the vapor top outlet flow **(15)** contains (cracked) evaporated feed, fresh hydrogen and recycle vapor.

Entrained smaller droplets are preferably being restricted by means of the internal plate restriction at **(14).** As defined by the law of Raoult, the introduction of fresh hydrogen and the recycle vapors, containing non condensable gasses and the excess hydrogen already present, will lower the partial pressure of the feedstock components in such a manner that these molecules will evaporate well below their normal boiling temperature. In this manner components that did not evaporate from the feed injected into the vapor flow, preferably in a conical tube, will evaporate when sprayed from the evaporator top. In this manner feed components, for example in between C16 and C30, will evaporate from the falling droplets when in contact to the countercurrent rising gas flow. After evaporation, the said molecules will face a reaction vapor environment at such pressure and temperature that (mild) cracking under hydrogen conditions is facilitated. As a consequence, hydrocarbons are formed in the range of the liquid fuels (say from C6 to C20) which can be treated in the first gas phase reactor **(27).**

In the preferred embodiment, the upward flowing vapor passing the grid subsequently enters a first bed **(26).** Typically this bed contains a solid catalyst bed capable of dechloronating organic chlorine components into HCL and organics. In addition this catalyst bed also might desulphurise organic sulphur components into H2S and organics. For these reactions fresh hydrogen may be added at point **(29).** The outgoing vapor of this reactor **(28)** can be fed directly to a second gas treatment reactor by means of the three way valve **(30)** being opened to reactor **(31).** In this reactor a desulphurising catalyst is applied. If needed, at the entrance of this reactor fresh hydrogen can be fed by means of the hydrogen flow line **(68)** in this part of the process **(29).** In another embodiment the gas phase reactors **(27, 31)** comprise more the one solid catalyst bed in each reactor. By using multiple catalyst beds in one reactor the pressure drop over a certain catalyst bed height can be lowered. Moreover, in between beds quench liquids, recycle vapor and/or hydrogen might be applied to optimize the ongoing catalyst process.

The outgoing vapor flow **(32)** can be treated by an H2S absorption reactor if the three way valve at **(33)** is opened to this reactor **(34).** One or more absorptions bed(s) (for example containing ZnO or FeO material) is taking the H2S components from the vapor flow.

In another embodiment the absorption bed(s) comprise(s) mixed materials capable of absorbing H2S, HCL and/or metal contaminants.

The outgoing flow **(35)** of this reactor **(34)** may flow to a second H2S absorption reactor **(38)** if both the three way valves **(36** and **37)** are opened in such a way that the vapor flow is allowed to do so. By means of one or both of these absorption reactors **(34, 38)** contaminants (including metals) from the main vapor flow are removed, as a result the reactors downstream in the process are protected. After the second H2S absorption reactor, the outgoing flow **(39)** may flow through three way valve **(40)** to a first hydrogenation reactor **(44).**

In another embodiment the H2S might be removed from the recycle loop and subsequently treated in a separate Claus unit.

From the H2S absorption reactor(s), the said outgoing stream is flowing to the first hydrogenation reactor **(44).** To create the proper vapor composition in the feed flow for this reactor a part of the main recycle vapor flow **(66)** may be added at point **(42)** and, if needed, combined with fresh hydrogen at point **(43).** The outgoing flow **(45)** of the first hydrogenation reactor **(44)** leaves through a three way valve at **(46).** The heat of this exothermal hydrogenation reaction may be used to preheat the recycled main process flow **(66)** in heat exchanger **(47)**.This preheating is preferred since the recycled vapor flow may have been cooled down significantly due to a condensation process in a splitter **(61).**

The vapor feed flow may optionally flow **(45)** to a second hydrogenation reactor **(51)** and may be mixed with a part of the main recycle vapor flow at entrance at point **(49)** and if needed, combined with fresh hydrogen at point **(50).** The recycled main vapor process flow **(66)** may be again preheated by exchanging the excess heat from the second hydrogenation process by means of unit **(54)** exchanging heat between the outgoing hydrogenated flow **(52)** and the said main recycle flow. At **(53)** a three way valve may be positioned to direct the flow to the splitter, such as a condensor.

Although two hydrogenation reactors are being mentioned more than two also can be applied if needed, each of these reactors are operated under such conditions that the vapor phase is kept outside its condensation range.

Due to this mode of operation the heat being produced by the exothermal hydrogenation reactions is being effectively used to reheat the main vapor recycle flow before being brought back to the evaporator. All the gas phase reactors are preferably designed in such a way that pressure drop over the catalysts bed is low, more in specific below 0,1 bar per meter of catalyst bed height. Due to this low pressure drop per reactor the overall pressure drop in cascade also is limited thereby enabling optimum process control.

All of the gas phase reactors are preferably operated under such conditions that the vapor phase is kept outside its condensation range.

In the preferred embodiment, the outgoing vapor **(52, 56)** flow from the second hydrogenation reactor **(51)** is being fed into a neutralizing unit **(59)** where, for example, a caustic liquid solution **(57)** is being sprayed into the vapor in order to condensate for example HCL and other acid vapor components thereby creating a liquid bottom product **(58).**

The outgoing vapor flow **(60)** from the neutralizer **(59)** may be forwarded to the main splitter **(61)** (such as a fractional distillation column or a condensor). The top flow **(62)** from this splitter containing cooled non-condensable organic vapors and excess hydrogen can be recompressed in a vapor compressor **(63).** The vapor compressor brings back the pressure that has dropped during processing back to the starting pressure applied in the evaporator.

Before being recycled, removal of purge gas from the main vapor flow may be regulated by a three way pressure relief valve **(64).** From this valve the purge gas **(65)** may be scrubbed according to the local environmental standards, recovery of hydrogen from the purge gas may be included as unit operation in this process. The main flow from this relief valve comprises the process recycle main flow **(66)** that may be partly used in the previous hydrogenation reactors **(44** and **51)** and finally being transported back to the evaporator **(8).** In another embodiment the non-condensable gasses are being separated from the recycle vapor flow in such a manner that mostly hydrogen is being transported back to the evaporator. The bottom flow **(67)** of the splitter is removed as liquid products to be further distilled and/or processed into transportation fuels such as standard diesel, gasoline, kerosene or marine fuels. The general hydrogen feed line is shown as dotted lines **(68).**

In the preferred embodiment, comprising three way valves at every reactor entrance and outlet in the gas phase treatment system, maximum flexibility is achieved since each gas phase reactor may be in or excluded from the process main vapor flow. This flexibility is especially important for multi feedstock processing since for instance pyrolysis waste oils do differ from source to source in terms of contaminants (e.g. chlorine or metals) and hydrocarbon composition. But also other feedstock, such as waste oils, might fluctuate in sulphur content or in olefines or in aromatics content. This changing set of feedstock parameters might require different reactor line ups. If for instance no sulphur is present in the feedstock, reactor **(31)** and one or both absorption bed(s) **(34, 38)** can be left out of this specific line up by pointing the three way valves **(30, 36, 37)** in such a manner that the main vapor flow bypasses these reactors. If in another feedstock example no hydrogenation is needed, the valves **(41, 53)** can be positioned in such a manner that the main vapor flow directly goes to the neutralizer **(59)** and splitter **(61),** thereby bypassing the hydrogenation reactors. This flexibility is exactly what this disclosure aims at. Part of the flexibility also is found in the fact that besides the described embodiment different number of gas reactors can be used containing various types of catalysts or adsorption material. Moreover in the condensation step various types of splitters, distillation units or condensors (e.g. vertical or horizontal) can be applied.

This invention is illustrated by the following experiment carried out with plastic pyrolysis oil (density = 870 kg/m3) from a packaging recycling plant. The pyrolysis oil was fed in the evaporator produced a yield of 80 m/m% over the top of this section at a temperature of 420 degree Celsius. The produced vapor phase, containing a multi component hydrocarbon mixture, may contain over 1000 components, (typically characterized as 60% olefines, 30% alkanes, and 10% aromatics) was subsequently treated in a two bed hydro-processing catalyst section showing a conversion yield for the unsaturated hydrocarbons of 52 %. This hydrotreating unit was operated at 350 degrees Celsius, with a GHSV (gas residence time for hydroprocessing) of 640 hr-1 per reactor bed. For the two catalyst beds used the total GHSV-hydrogenation thus was 320 hr-1. The overall liquid production yield (compared to the feed) after the condenser was measured at 75% for this experiment. The mass ratio fresh hydrogen to the feed flow was less then 1 % for this experiment.

## Claims

1. A process for hydroprocessing a liquid feed (6) comprising hydrocarbons comprising the steps of
injecting the liquid feed (6) into a hot vapor flow (15) from an evaporator (8) for quenching the hot vapor flow (15) forming a two phase vapor-liquid flow, separating the two phase vapor-liquid flow in a liquid flow and a vapor flow in a separating device,
introducing the liquid flow from the separating device into the evaporator (8) by a spraying device (7) forming droplets of liquid (9) comprising hydrocarbons, introducing non-condensable hydrocarbon gasses (12) and hydrogen gas (19) into the evaporator (8) for evaporating hydrocarbons from the droplets of liquid (9) by an upward moving vapor flow (13) of non-condensable hydrocarbon gasses (12) and hydrogen gas (19) and for cracking the evaporated hydrocarbons forming cracked hydrocarbons.

2. The process according to claim 1 wherein the processed hydrocarbons are fuels, or fuel components, suitable to be used in products in accordance to
○ the EN 228 gasoline standard,
○ the EN 590 gasoil standard,
○ jet fuels according to standards such as ASTM D 1655 or NATO jet code F, and/or
○ fuel oils according to the standard such as ISO 8217.

3. The process according to any of the preceding claims wherein the hot vapor flow is introduced into a gas phase reactor comprising one or more the one solid catalyst bed(s) in each reactor.

4. The process according to claim 4 wherein the solid catalyst beds are filled with mixed materials capable of absorbing H2S, HCL and/or metal contaminants.

5. The process according to any of the preceding claims wherein quench liquids such as the liquid feed, or gasses such as hydrogen or recycle vapor is applied in the solid catalyst and absorption beds.

6. The process according to any of the preceding claims wherein the process is used to produce cracker feed stock such as used in naphta crackers.

7. An installation for executing a process for hydroprocessing a liquid feed comprising hydrocarbons according to one of the preceding claims comprising
an injector for injecting a the liquid feed into a hot vapor flow to form a two phase vapor-liquid flow,
a separating device for separating the two phase vapor-liquid flow into a liquid flow and a vapor flow,
an evaporator for evaporating droplets of liquid comprising hydrocarbons, and a spraying device for forming droplets of liquid comprising hydrocarbons.

## Amended claims

### Amended claims in accordance with Rule 137(2) EPC.

**1.** A process for hydroprocessing a liquid feed (6) comprising hydrocarbons comprising the steps of
injecting the liquid feed (6) into a hot vapor flow (15) from an evaporator (8) for quenching the hot vapor flow (15) forming a two phase vapor-liquid flow, separating the two phase vapor-liquid flow in a liquid flow and a vapor flow in a separating device,
introducing the liquid flow from the separating device into the evaporator (8) by a spraying device (7) forming droplets of liquid (9) comprising hydrocarbons, introducing non-condensable hydrocarbon gasses (12) and hydrogen gas (19) into the evaporator (8) for lowering the partial pressure of the feedstock components in such a manner that these molecules will evaporate from the droplets of liquid (9) well below their normal boiling temperature by contact between the droplets of liquid (9) and an upward moving vapor flow (13) of non-condensable hydrocarbon gasses (12) and hydrogen gas (19) and for cracking the evaporated hydrocarbons forming cracked hydrocarbons such that the vapor top outlet flow (15) at the upper end of the evaporator contains (cracked) evaporated feed, fresh hydrogen and recycle vapor.

**2.** The process according to claim 1 wherein the processed hydrocarbons are fuels, or fuel components, suitable to be used in products in accordance to
∘ the EN 228 gasoline standard,
∘ the EN 590 gasoil standard,
∘ jet fuels according to standards such as ASTM D 1655 or NATO jet code F, and/or
∘ fuel oils according to the standard such as ISO 8217.

**3.** The process according to any of the preceding claims wherein the hot vapor flow is introduced into a gas phase reactor comprising one or more the one solid catalyst bed(s) in each reactor.

**4.** The process according to claim 4 wherein the solid catalyst beds are filled with mixed materials capable of absorbing H2S, HCL and/or metal contaminants.

**5.** The process according to any of the preceding claims wherein quench liquids such as the liquid feed, or gasses such as hydrogen or recycle vapor is applied in the solid catalyst and absorption beds.

**6.** The process according to any of the preceding claims wherein the process is used to produce cracker feed stock such as used in naphta crackers.
